# EUROPÄISCHE PATENTSCHRIFT

(11) **EP 1 591 155 B1**
(45) Veröffentlichungstag und Bekanntmachung des Hinweises auf die Patenterteilung: **28.02.2007**
(21) Anmeldenummer: 05008982.0
(22) Anmeldetag: 25.04.2005
(51) Int. Cl.: B01D 35/02, B01D 29/66

(54) **Vorrichtung zum Trennen von Partikeln aus strömenden kompressiblen oder inkompressiblen Fluiden und verfahren zum Spülen einer solchen Vorrichtung**
Device for separating particles from compressible or incompressible fluid and method for cleaning such a device
Dispositif de séparation de particules d'un fluide compressible ou incompressible et méthode de lavage d'un tel dispositif

(30) Priorität: 29.04.2004 DE 102004021130
(43) Veröffentlichungstag der Anmeldung: 02.11.2005
(73) Patentinhaber: Honeywell Technologies Sarl ECC, 1110 Morges (CH)
(72) Erfinder: Miecznik, Bert, 74834 Elztal-Auerbach (DE)
(74) Vertreter: Graefe, Jörg

(56) Entgegenhaltungen:
- EP-A- 0 925 817
- BE-A- 453 806
- US-A- 5 769 539
- US-A1- 2002 158 005

## Beschreibung

Die vorliegende Erfindung betrifft eine Vorrichtung zum Trennen von Partikeln aus strömenden kompressiblen oder inkompressiblen Fluiden sowie ein Verfahren zum Spülen einer solchen Vorrichtung.

Eine Vorrichtung zum Trennen von Partikeln aus Fluiden wie zum Beispiel Flüssigkeiten oder Gasen ist aus dem Stand der Technik bekannt. Eine solche Vorrichtung weist eine Hauptleitung auf, in welcher zumindest ein Hauptfilterelement angeordnet ist. Dieses Hauptfilterelement filtert aus dem in der Hauptleitung in einer Hauptströmungsrichtung transportierten Fluid Partikel heraus. Dabei ergibt sich das Problem, dass der Filter von den Partikeln nach und nach zugesetzt wird und sich vor dem Hauptfilterelement ein Filterkuchen bilden kann. Dieses kann dazu führen, dass ein Transport des Fluids durch die Hauptleitung behindert oder sogar unterbunden wird.

Aus dem Stand der Technik sind verschiedene Verfahren und Vorrichtungen bekannt, um das Hauptfilterelement wieder gangbar zu machen. Es werden auswechselbare Hauptfilterelemente vorgeschlagen. Eine weitere bekannte Möglichkeit ist es, die Hauptfilterelemente rückzuspülen. Rückspülbare Vorrichtungen zum Trennen von Partikeln aus Fluiden werden beispielsweise für den Fall der Trinkwasserfiltration innerhalb von Gebäuden in der Norm EN 13443-1 beschrieben. Die Rückspülung bei den bisher bekannten rückspülbaren Vorrichtungen zum Trennen von Partikeln aus Fluiden erfolgt technisch bedingt bei den bekannten Vorrichtungen parallel zu einem Ausspülprozess aus der Vorrichtung heraus. Dazu wird ein Fluid von der Rückseite auf das Hauptfilterelement geleitet, um das Hauptfilterelement entgegen der Hauptströmungsrichtung zu durchspülen. Das dazu verwendete Fluid geht verloren. Dieses ist insbesondere deshalb unwirtschaftlich, da das für die Rückspülung beziehungsweise das Ausspülen verbrauchte Fluid im Allgemeinen nur eine vergleichsweise geringe Partikelkonzentration aufweist. Ferner muss die Rückspülung extern eingeleitet werden, so dass eine Steuerungs- oder Regelungsvorrichtung vorgesehen werden muss, oder aber die Benutzer angeleitet werden, dass sie in regelmäßigen Abständen die Vorrichtung spülen. Da dabei gelegentlich sehr große Zeitintervalle vergehen können, müssen die verwendeten Hauptfilterelemente so groß sein, um selbst für lange Standzeiten ohne Spülung ausreichend freie Filterfläche vorzuhalten. Nur so kann gewährleistet sein, dass die Durchströmung durch das Hauptfilterelement nicht gefährdet ist. Eine manuelle Auslösung der Spülung kann insbesondere bei den recht langen Zeitintervallen auch leicht von dem Benutzer vergessen werden. Eine selbsttätige Einleitung durch ein Steuer- oder Regelungsmittel erfordert dagegen einen großen apparativen Aufwand, beispielsweise auch zur Ableitung des Abfallfluids und so weiter.

Ein weiterer Nachteil ist, dass die Partikel bei der Verwendung der Vorrichtung mit einem nährstoffenthaltenden Fluid eine mikrobielle Besiedlung am Hauptfilterelement erleichtern. Sofern die Zeitintervalle zwischen den Spülvorgängen sehr groß sind, kann dies zu einer deutlichen Kontamination mit Mikroorganismen im Bereich des Hauptfilterelements führen, was die Hygiene wie auch wiederum die Durchströmung des Hauptfilterelements weiter beeinträchtigt.

Außerdem ist ein technisches Problem vieler bekannter Vorrichtungen der eingangs genannten Art, die mittels einer Rückspülung gereinigt werden können, dass eine ununterbrochene Weiterführung des Filtrationsprozesses während der laufenden Rückspülung nicht oder nur mit Schwierigkeiten möglich ist.

Der Erfindung liegt daher die Aufgabe zugrunde, eine Vorrichtung zum Trennen von Partikeln aus Fluiden vorzuschlagen, bei der mit einfachen Mitteln eine vorzugsweise automatische Rückspülung des Filters erreicht wird, ohne dass der Filtrationsprozess unterbrochen wird. Weiter liegt der Erfindung die Aufgabe zugrunde, die Vorrichtung so zu gestalten, dass auch bei nur unregelmäßigen bis seltenen Benutzereingriffen eine regelmäßige Rückspülung des Hauptfilterelements sichergestellt ist, um eine mikrobielle Kontamination des Bereichs vor dem Hauptfilterelement möglichst zu unterbinden.

Diese Aufgaben werden durch eine erfindungsgemäße Vorrichtung nach Anspruch 1 gelöst. Ein Verfahren zum Spülen einer solchen Vorrichtung ist in Anspruch 14 angegeben. Die von den Ansprüchen 1 und 14 abhängigen Ansprüche beschreiben Weiterentwicklungen und konkrete Ausgestaltungen der Vorrichtung beziehungsweise des Verfahrens.

Eine erfindungsgemäße Vorrichtung weist neben der zumindest einen Hauptleitung zum Leiten des Fluids in der Hauptströmungsrichtung und dem zumindest einen Hauptfilterelement zumindest eine Nebenleitung auf. In der Hauptströmungsrichtung vor dem Hauptfilterelement hat die Hauptleitung einer erfindungsgemäßen Vorrichtung einen ersten Abschnitt und einen zweiten Abschnitt, wobei der zweite Abschnitt zwischen dem ersten Abschnitt und dem Hauptfilterelement angeordnet ist. Die Nebenleitung zweigt in dem zweiten Abschnitt der Hauptleitung von der Hauptleitung ab und mündet in den ersten Abschnitt der gleichen Hauptleitung oder einer weiteren Hauptleitung. In der Nebenleitung einer erfindungsgemäßen Vorrichtung ist zumindest ein Nebenfilterelement angeordnet. Die Vorrichtung ist so ausgestaltet, dass bei einer Strömung des Fluids in die Hauptströmungsrichtung im ersten Abschnitt, d. h. an der Mündung der Nebenleitung ein niedrigerer Druck herrscht als in dem zweiten Abschnitt, in dem die Nebenleitung beginnt. Dieses kann erfindungsgemäß dadurch erreicht werden, dass der erste Abschnitt eine im Verhältnis zu den übrigen Querschnitten und insbesondere im Verhältnis zu dem Querschnitt des zweiten Abschnitts geringe Querschnittsfläche hat. Der erste Abschnitt kann beispielsweise durch eine Venturidüse gebildet sein oder eine Venturidüse umfassen. Ebenso kann im ersten Abschnitt oder als erster Abschnitt eine andere hydraulische Fördereinrichtung vorgesehen sein. Bevorzugt werden dabei Fördereinrichtungen ohne bewegbare Teile verwendet. So kann insbesondere eine sogenannte Strahlpumpe eingesetzt werden, welche die Verringerung der Querschnittsfläche in einer sogenannten Strahldüse oder Treibdüse mit einer geeignet angeordneten Strahlaufnahmevorrichtung kombiniert (Fang- oder Mischdüse) und auf diese Art zusätzlich ein Mitnahmephänomen an der Strahlgrenzfläche für die Fluidförderung nutzbar macht. Die Strahlpumpe hat einen Treibanschluss, mit welchem die Strahlpumpe aufstrornseitig, und einen Druckanschluss, mit welchem die Strahlpumpe abstromseitig - jeweils bezogen auf die Hauptströmungsrichtung - in der Hauptleitung eingesetzt ist. Die Nebenleitung mündet an einem Sauganschluss der Strahlpumpe. Durch die Verwendung der Strahlpumpe kann insbesondere bei Vorrichtungen mit zwei oder mehr Hauptleitungen die Rückspülleistung vergrößert werden.

Eine erfindungsgemäße Vorrichtung kann eine Überströmleitung umfassen, die vor dem ersten Abschnitt von der Hauptleitung abzweigt und hinter dem ersten Abschnitt und zwar vor dem Hauptfilterelement in die Hauptleitung mündet. In der Überströmleitung kann ein Ventil eingesetzt sein, welches nachfolgend auch als Überströmventil bezeichnet wird.

Die Nebenleitung einer erfindungsgemäßen Vorrichtung kann vor dem Nebenfilterelement eine Kammer zum Sammeln von Partikeln umfassen, die in die Sammelkammer gefördert werden. Die Sammelkammer kann vorteilhaft eine verschließbare Öffnung zum Entleeren und Reinigen der Sammelkammer umfassen.

Die Nebenleitung einer erfindungsgemäßen Vorrichtung kann hinter dem Nebenfilterelement eine weitere Kammer umfassen. Diese weitere Kammer, die auch als Unterdruckkammer bezeichnet wird, kann ein Element zur Verzögerung eines Druckausgleichs aufweisen. Dieses Verzögerungselement kann eine Membran umfassen und/oder einen gasgefüllten Ballon aufweisen.

Hinter dem Nebenfilterelement und insbesondere zwischen der Unterdruckkammer und der Einmündung der Nebenleitung in den Hauptkanal kann ein Ventil oder eine Rückschlagklappe angeordnet sein.

In einer besonderen Ausführung kann eine erfindungsgemäße Vorrichtung vor dem Nebenfilterelement einen Zentrifugalabscheider, zum Beispiel einen Zyklonen, oder einen Hydrozyklonen umfassen, um den Durchsatz durch die Nebenleitung vergrößern zu können.

Eine vorbeschriebene erfindungsgemäße Vorrichtung kann mit dem folgenden erfindungsgemäßen Verfahren gespült werden. Das Verfahren umfasst einen ersten Zustand der Vorrichtung, in dem in der Hauptströmungsrichtung das Fluid durch die Hauptleitung gefördert wird. Dabei wird ein Nebenstrom im zweiten Abschnitt der gleichen oder einer anderen Hauptleitung aufgrund der Druckverhältnisse in der Vorrichtung in die Nebenleitung abgeleitet, wobei der Nebenstrom im ersten Abschnitt der erstgenannten, fluiddurchströmten Hauptleitung dieser Hauptleitung wieder zugeführt wird.

Ein erfindungsgemäßes Verfahren kennt ferner einen zweiten Zustand der Vorrichtung, in dem entgegen der Hauptströmungsrichtung das Fluid durch das Hauptfilterelement gefördert wird und die Strömungsgeschwindigkeit des Fluids im ersten Abschnitt annähernd Null ist. In diesem zweiten Abschnitt kann dann das Fluid zumindest In einem Abschnitt der Nebenleitung und zumindest zeitweise eine Strömungsgeschwindigkeit aufweisen, die von Null verschieden ist.

Im ersten Zustand des erfindungsgemäßen Verfahrens kann der Druck im ersten Abschnitt der Hauptleitung kleiner als der Druck im zweiten Abschnitt der Hauptleitung sein. Im zweiten Zustand dagegen ist der Druck Im ersten Abschnitt der Hauptleitung annähernd so groß wie der Druck im zweiten Abschnitt der Hauptleitung.

Im zweiten Zustand und auch im ersten Zustand der erfindungsgemäßen Vorrichtung kann der Druck in der Nebenleitung hinter dem Nebenfilterelement kleiner sein als im zweiten Abschnitt der Hauptleitung.

Im zweiten Zustand des erfindungsgemäßen Verfahrens kann der Druck in der Hauptleitung hinter dem Hauptfilterelement größer sein als der Druck im zweiten Abschnitt der Hauptleitung. Dadurch ist gewährleistet, dass eine Rückspülung durch das Hauptfilterelement erfolgen kann.

Ausführungsbeispiele für erfindungsgemäße Vorrichtungen sind in der Zeichnung näher beschrieben. Anhand dieser Ausführungsbeispiele wird auch das erfindungsgemäße Verfahren erläutert. In der Zeichnung zeigt
- Fig. 1: ein erstes Ausführungsbeispiel mit einer Hauptleitung und
- Fig. 2: ein zweites Ausführungsbeispiel mit zwei Hauptleitungen.

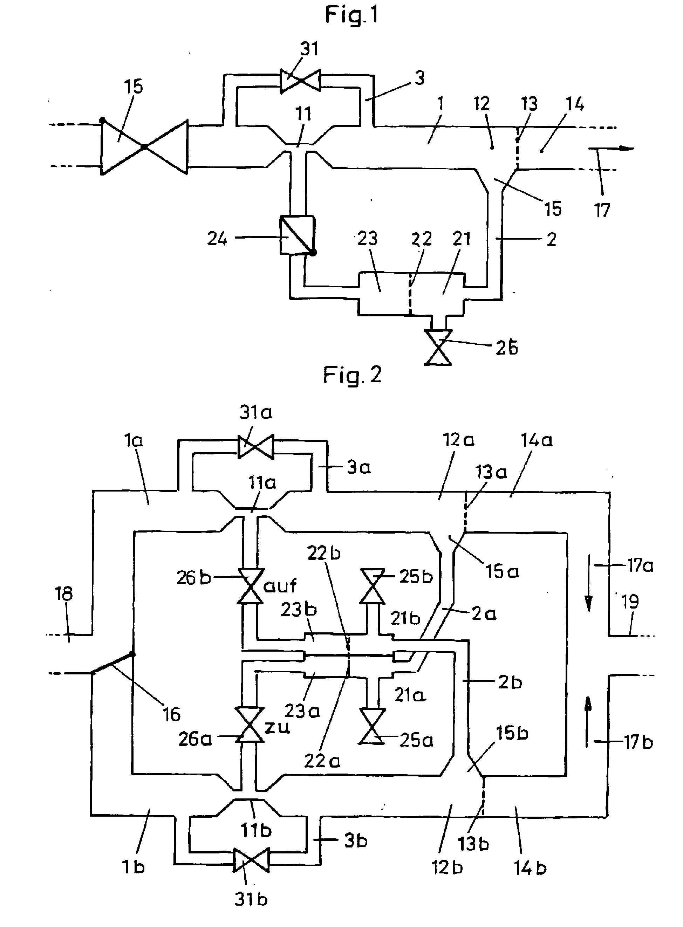

Zunächst wird auf Fig. 1 Bezug genommen. Die Hauptleitung 1 der in der Fig. 1 dargestellten erfindungsgemäßen Vorrichtung Ist über ein Rückschlagventil 15 an ein weiteres Rohrleitungsnetz oder einen Tank angeschlossen. Aus diesem weiteren Rohrleitungsnetz beziehungsweise dem Tank soll ein Fluid in der Hauptströmungsrichtung 17 zu weiteren nicht dargestellten Vorrichtungen oder Anlagen transportiert werden. Während des Transports durch die Hauptleitung 1 soll dabei das Fluid gefiltert werden.

Die Hauptleitung 1 der erfindungsgemäßen Vorrichtung weist in der Hauptströmungsrichtung hintereinander liegend einen ersten Abschnitt 11, einen zweiten Abschnitt 12, ein Hauptfilterelement 13 und einen sich an das Hauptfilterelement 13 anschließenden weiteren Abschnitt 14 auf. Der erste Abschnitt 11 hat dabei eine deutlich geringere Querschnittsfläche als der zweite Abschnitt 12, an den sich unmittelbar das Hauptfilterelement 13 anschließt.

Die erfindungsgemäße Vorrichtung gemäß Fig. 1 weist eine Nebenleitung 2 auf, die über einen Abschlämmtrichter 15 im zweiten Abschnitt der Hauptleitung 1 von der Hauptleitung abzweigt. Diese Nebenleitung weist hintereinander liegend eine Sammelkammer 21, ein Nebenfilterelement 22, eine weitere Kammer 23, die Im Folgenden auch als Unterdruckkammer bezeichnet wird, und eine Rückschlagklappe 24 auf. Die Nebenleitung 2 mündet hinter der Rückschlagklappe 24 in dem ersten Bereich der Hauptleitung 1. Die Sammelkammer 21 weist eine verschließbare Öffnung auf, über welche die Sammelkammer 21 zum Beispiel gereinigt werden kann und welche in Fig. 1 als Ventil 25 dargestellt ist.

Die Vorrichtung gemäß Fig. 1 weist ferner eine Überströmleitung 3 auf, die vor dem ersten Abschnitt 11 der Hauptleitung 1 von der Hauptleitung 1 abzweigt und hinter dem ersten Abschnitt 11 wieder in die Hauptleitung 1 einmündet. Die Überströmleitung 3 weist ein Ventil 31 auf, welches im Folgenden auch als Überströmventil 31 bezeichnet wird.

Ziel der erfindungsgemäßen Vorrichtung ist es, dass das Hauptfilterelement 13 möglichst wartungsfrei ist und nicht ausgewechselt oder manuell gereinigt werden muss. Zum Verständnis der Funktionsweise der erfindungsgemäßen Vorrichtung ist die Betrachtung von zwei Zuständen sinnvoll, in welche die erfindungsgemäße Vorrichtung gebracht werden kann.

In einem ersten Zustand der erfindungsgemäßen Vorrichtung wird die Hauptleitung 1 kontinuierlich in der Hauptströmungsrichtung 17 von einem Fluid durchströmt. Dazu ist das Rückschlagventil 15 geöffnet und in der Hauptleitung 1 herrscht am Anfang der Hauptleitung 1, d. h. hinter dem Rückschlagventil 15 ein höherer Druck als in dem Abschnitt 14 hinter dem Hauptfilterelement 13. Dieser Druckunterschied entsteht bei Strömung des Fluids durch Reibung an den verschiedenen Elementen der Vorrichtung. Aufgrund der Strömung des Fluids durch die Hauptleitung 1 stellt sich im ersten Abschnitt 11 der Hauptleitung 1 ein Druck p₁₁ ein. Im zweiten Abschnitt 12 der Hauptleitung 1 hat das Fluid dagegen einen Druck p₁₂. Aufgrund der Kontinuitätsgleichung und der Bernoulligleichung ergibt sich bei einer für inkompressible Fluide gleich bleibenden Dichte des Fluids, dass der Druck p₁₁ kleiner ist als der Druck p₁₂. Damit herrscht zwischen den beiden Abschnitten 11, 12 der Hauptleitung 1, an denen die Nebenleitung 2 einmündet beziehungsweise abzweigt, ein Druckunterschied.

Der Druckunterschied zwischen dem zweiten Abschnitt 12 und dem ersten Abschnitt 11 bewirkt, dass ein Teil des Fluids als Nebenstrom durch die Nebenleitung 2 dem Druckgradienten folgend vom zweiten Abschnitt 12 zum ersten Abschnitt 11 transportiert wird. Das im zweiten Abschnitt 12 abgezogene Fluid wird über die Sammelkammer 21 durch das Nebenfilterelement 22, die Unterdruckkammer 23 und die Rückschlagklappe 24 zum ersten Abschnitt 11 transportiert. Dabei werden Partikel, die sich vor dem Hauptfilterelement 13 insbesondere in dem Abschlämmtrichter 15 sammeln, ganz oder teilweise in die Nebenleitung 2 transportiert. Von dem Nebenfilter 22 werden diese Partikel zurückgehalten, wodurch sich die Partikel in der Sammelkammer 21 anreichern. Der von den Partikeln befreite Nebenstrom wird über die Rückschlagklappe 24 dann im ersten Abschnitt wieder in die Hauptleitung 1 transportiert. Der Fluldtransportstrom kann durch Verwendung einer hydraulischen Fördereinrichtung wie einer Strahlpumpe im ersten Abschnitt zusätzlich vergrößert werden, um dadurch einen gewünschten Nebenstrom zu gewährleisten.

Im ersten Zustand der erfindungsgemäßen Vorrichtung gemäß Fig. 1 wird somit kontinuierlich dafür gesorgt, dass sich vor dem Hauptfllterelement ansammelnde Partikel abgezogen werden und nicht das Hauptfilterelement 13 verstopfen, beziehungsweise zusetzen. Die Bildung eines Filterkuchens vor dem Hauptfilterelement 13 ist somit verhindert.

Die Überströmleitung 3 kann im ersten Zustand der erfindungsgemäßen Vorrichtung die Funktion haben, einen Teil des durch die Hauptleitung 1 transportierten Fluidstroms am ersten Abschnitt 11 der Hauptleitung 1 vorbei zu transportieren. Dieses ist immer dann sinnvoll, wenn der erste Abschnitt 11 den Volumenstrom beziehungsweise den Druck des zu transportierenden Fluids so reduziert, dass dieser am Ausgang der Vorrichtung hinter dem Abschnitt 14 hinter dem Hauptfilterelement 13 der Hauptleitung 1 für die weitere Verwendung des Fluids nicht ausreichend ist. In diesen Fällen wird dann das Überströmventil 31 geöffnet, so dass ein Teil des durch die Vorrichtung zu transportierenden Fluidstroms den ersten Abschnitt 11 der Hauptleitung ungehindert passiert, wobei gleichzeitig dafür Sorge getragen wird, dass der vollständige Strom durch die Vorrichtung mittels des Hauptfilterelements 13 gefiltert wird.

Im zweiten Zustand der in der Fig. 1 dargestellten Vorrichtung erfolgt kein Transport des Fluids durch die erfindungsgemäße Vorrichtung. D.h. insbesondere, dass die Strömungsgeschwindigkeit des Fluids vor und im ersten Abschnitt 11 der Hauptleitung annähernd gleich Null ist. Die Unterbrechung der Strömung kann dadurch bewirkt werden, dass hinter der erfindungsgemäßen Vorrichtung kein Fluid abgenommen wird. Dadurch wird ein Anstieg des Drucks p₁₄ in dem Abschnitt 14 hinter dem Hauptfilterelement 13 bewirkt. Ebenso steigt der Druck p₁₁, p₁₂ im ersten Abschnitt 11 und im zweiten Abschnitt 12 der Hauptleitung 1 an. Der Druckanstieg im ersten Bereich 11 bewirkt ein Schließen des Rückschlagventils 15 und auch ein Schließen der Rückschlagklappe 24 in der Nebenleitung 2, da der Druck p₂₃ in der Unterdruckkammer 23 schlagartig geringer ist als der Druck p₁₁ Im ersten Abschnitt 11.

Da von dem ersten Abschnitt 11 zum zweiten Abschnitt 12 annähernd keine Strömung des Fluids stattfindet, ist der Druck p₁₁ im ersten Abschnitt 11 und der Druck p₁₂ im zweiten Abschnitt 12 annähernd gleich groß. Der Druck p₁₂ im zweiten Abschnitt 12 ist dabei jedoch geringfügig kleiner als der Druck p₁₄ im Abschnitt 14 hinter dem Hauptfilterelement 13. D. h. umgekehrt, der Druck p₁₄ in dem Abschnitt 14 hinter dem Hauptfilterelement 13 ist größer als der Druck p₁₂ vor dem Hauptfilterelement 13 und der Druck p₁₂ vor dem Hauptfilterelement 13 ist größer als der Druck p₂₃ in der Unterdruckkammer der Nebenleitung 2. Diese Druckunterschiede bewirken zum einen eine Strömung des Fluids entgegen der Hauptströmungsrichtung 17 durch das Hauptfilterelement und weiter eine Strömung aus dem zweiten Abschnitt 12 der Hauptleitung 1 über den Abschlämmtrichter 15 in die Nebenleitung 2 zur Unterdruckkammer 23 der Nebenleitung 2. Dieser Fluidtransport dauert so lange an, bis der Druck p₂₃ in der Unterdruckkammer 23 genauso groß ist wie der Druck p₁₂ im zweiten Abschnitt der Hauptleitung 1. Da die Druckunterschiede in der Regel sehr schnell ausgeglichen werden, dauert der zweite Zustand nur immer sehr kurz an.

Tritt nach Beendigung des zweiten Zustands nicht unmittelbar die Strömung durch die Hauptleitung 1 der erfindungsgemäßen Vorrichtung wieder ein, wird die Vorrichtung in einen vierten Zustand überführt, in welchem ausgeglichene Druckverhältnisse herrschen und keine Strömung stattfindet.

Im zweiten Zustand der erfindungsgemäßen Vorrichtung wird mittels der Strömung durch das Hauptfilterelement entgegen der Hauptströmungsrichtung 17 eine Rückspülung des Hauptfilterelements 13 erreicht. Die dabei von dem Hauptfilterelement 13 abgelösten Partikel werden dann unmittelbar in die Nebenleitung 2 oder zumindest in den zweiten Abschnitt überführt und können sich dann in der Sammelkammer 21 absetzen. Der Inhalt der Sammelkammer 21 kann durch Öffnen der Entleerung 25 durch den Benutzer ausgespült werden. Um hierbei in dem dritten Zustand gleichzeitig das Nebenfilterelement 22 rückzuspülen, ist die Verwendung einer von außen in der Öffnungsposition blockierbaren Rückschlagklappe 24 besonders vorteilhaft. Das Fluid strömt in diesem vierten Zustand sowohl über den ersten Abschnitt 11 und anschließend die Unterdruckkammer 23 sowie auch über den zweiten Abschnitt 12 und die Nebenleitung 2 von beiden Seiten in die Sammelkammer 21. Der über die Unterdruckkammer 23 in die Sammelkammer 21 gelangte Anteil passiert hierbei auch das Nebenfilterelement 22 entgegen seiner normalen Durchströmungsrichtung und spült dieses dadurch zurück.

Die in Fig. 2 dargestellte erfindungsgemäße Vorrichtung mit zwei Hauptleitungen 1 a, 1 b weist einen gemeinsamen Einlass 18 und einen gemeinsamen Auslass 19 auf, zwischen denen die beiden Hauptleitungen 1 a, 1 b angeordnet sind. Am gemeinsamen Einlass ist eine Wechselklappe 16 vorgesehen, welche so eingestellt ist, dass entweder die eine Hauptleitung oder aber die andere Hauptleitung mit dem Fluid versorgt wird. Zeichnerisch dargestellt ist in Fig. 2 der Zustand, in dem die erste Hauptleitung 1 a aus dem gemeinsamen Einlass mit dem Fluid versorgt wird, während die zweite Hauptleitung 1 b von dem gemeinsamen Einlass durch die Wechselklappe 16 abgetrennt ist.

Die erste Hauptleitung 1 a und die zweite Hauptleitung 1 b weisen jeweils eine Hauptströmungsrichtung 17a, beziehungsweise 17b auf, entlang welcher das Fluid bei in Bezug auf die jeweilige Hauptleitung 1 a, 1 b geöffneten Wechselklappe 16 durch die Hauptleitung 1 a, beziehungsweise 1 b transportiert wird. In dieser Hauptströmungsrichtung 17a, 17b hintereinanderliegend weisen die beiden Hauptleitungen einen ersten Abschnitt 11 a, 11 b, einen zweiten Abschnitt 12a, 12b, ein Hauptfilterelement 13a, 13b und einen hinter dem Hauptfilterelement 13a, 13b angeordneten weiteren Abschnitt 14a, 14b auf. Der erste Abschnitt 11a, 11 b jeder Hauptleitung 1a, 1 b ist dabei so ausgestaltet, dass er eine deutlich geringere Querschnittsfläche hat als der zweite Abschnitt 12a, 12b derselben Hauptleitung 1 a, 1 b. Die Hauptleitungen 1 a, 1 b sind somit weltgehend entsprechend der Hauptleitung 1 der erfindungsgemäßen Vorrichtung gemäß Fig. 1 ausgebildet. Ebenso können hier wiederum hydraulische Fördereinrichtungen wie beispielsweise Strahlpumpen vorgesehen sein.

Ebenso wie bei der Hauptleitung 1 bei der erfindungsgemäßen Vorrichtung gemäß Fig. 1 zweigt von den Hauptleitungen 1a, 1b jeweils eine Überströmleitung 3a, 3b ab, in welcher ein Überströmventil 31 a, 31 b eingeschaltet ist. Die Überströmleitungen, - ventile 3a, 3b haben dabei den gleichen Zweck wie die Überströmleitung, -ventil des Ausführungsbeispiels gemäß Fig. 1.

Im zweiten Abschnitt 12a, 12b zweigt über einen Abschlämmtrichter 15a, 15b von jeder der beiden Hauptleitungen 1 a, 1 b eine Nebenleitung 2a, 2b ab. Die Nebenleitung 2a, die von der Hauptleitung 1 a abzweigt, mündet dabei im ersten Abschnitt 11 b der zweiten Hauptleitung 1 b, während die Nebenleitung 2b, die im zweiten Abschnitt 12b der zweiten Hauptleitung 1 b abzweigt, im ersten Abschnitt 11 a der ersten Hauptleitung 1 a mündet. Jede der beiden Nebenleitungen 2a, 2b weist zwischen der Abzweigung im zweiten Abschnitt 12a, beziehungsweise 12b und der Mündung im ersten Abschnitt 11a, 11 b der jeweils anderen Hauptleitung 1a, 1 b eine Sammelkammer 21 a, 21 b, ein Nebenfilterelement 22a, 22b, eine weitere Kammer 23a, 23b, die im Weiteren als Unterdruckkammer 23a, 23b bezeichnet wird, und ein Ventil 26a, 26b auf. Jede der Sammelkammern 25a, 25b weist eine verschließbare Öffnung auf, die in Fig. 2 zeichnerisch als Ventile dargestellt sind.

Zum Verständnis der Erfindung ist die Kenntnis von zwei Zuständen notwendig, in welche die erfindungsgemäße Vorrichtung gemäß Fig. 2 gebracht werden kann.

Ein erster Zustand ist dargestellt und ist durch die Stellung der Wechselklappe 16 und dem Zustand der Ventile 26a, 26b gekennzeichnet. In diesem ersten Zustand ist die Wechselklappe 16 so eingestellt, dass die erste Hauptleitung 1 a mit Fluid versorgt wird. Das in die zweite Nebenleitung 2b eingesetzte Ventil 26b ist in einem geöffneten Zustand, während das in die erste Nebenleitung eingesetzte Ventil 26a geschlossen ist. D. h., dass die zweite Nebenleitung 2b durchströmt werden kann, während die erste Nebenleitung 2a nicht durchströmt werden kann.

In dem ersten Zustand der erfindungsgemäßen Vorrichtung gemäß Fig. 2, wie er in der Fig. 2 dargestellt ist, stellt sich, wie man aus der Kontinuitätsgleichung und der Bernoulligleichung ermitteln kann, ein Druckunterschied zwischen dem ersten Abschnitt 11a der ersten Hauptleitung 1 und dem gemeinsamen Auslass 19 ein. Aufgrund des deutlich geringeren Querschnitts des ersten Abschnitts 11a ist der Druck p₁₁ₐ im ersten Abschnitt 11a der ersten Hauptleitung geringer als der Druck p₁₉ am gemeinsamen Auslass. Dieser Druckunterschied bewirkt eine Strömung entgegen der Hauptströmungsrichtung 17b der zweiten Hauptleitung 1 b durch den hinter dem Hauptfilterelement 13b angeordneten Abschnitt 14b, durch das Hauptfilterelement 13b, den zweiten Abschnitt 12b und die zweite Nebenleitung 2b mit der Sammelkammer 21 b, dem Nebenfilterelement 22b, der Unterdruckkammer 23b und dem Ventil 26b. In dem ersten Zustand der erfindungsgemäßen Vorrichtung gemäß Fig. 2 wird also durch den relativ niedrigen Druck p₁₁ₐ im ersten Abschnitt 11a eine kontinuierliche Rückspülung des Hauptfilterelements 13b der zweiten Hauptleitung bewirkt, da das Fluid kontinuierlich entgegen der Hauptströmungsrichtung 17b der zweiten Hauptleitung 1b durch das Hauptfilterelement 13b transportiert wird. Partikel, die sich im Hauptfilterelement 13b festgesetzt haben, können dadurch gelöst werden, und Partikel, die sich vor dem Hauptfilterelement 13b abgesetzt haben, zum Beispiel im Abschlämmtrichter 15b, werden aufgrund der Strömung in die zweite Nebenleitung 2b transportiert. Vor dem Nebenfilterelement 22b werden die Partikel dann in der Sammelkammer 21 b angereichert.

Partikel, die im ersten Zustand der erfindungsgemäßen Vorrichtung in der ersten Hauptleitung 1 a durch das Hauptfilterelement 13a im zweiten Abschnitt 12a angereichert werden, sammeln sich dort vorzugsweise in dem Abschlämmtrichter 15a oder am Hauptfilterelement 13a. Wird aus dem ersten Zustand die Entleerung 25b der Sammelkammer 21 b zur Ausspülung geöffnet, so führt dies In einem dritten Zustand gleichzeitig zu einer besonders vorteilhaften Rückspülung des Nebenfilterelements 22b.

Der zweite Zustand der erfindungsgemäßen Vorrichtung gemäß Fig. 2 ist dadurch gekennzeichnet, dass die Wechselklappe, anders als in der Fig. 2 dargestellt, die erste Hauptleitung 1a verschließt, während die zweite Hauptleitung 1b durchströmt werden kann. Gleichzeitig ist anders als in Fig. 2 dargestellt, das Ventil 26b geschlossen und das Ventil 26a geöffnet. Dadurch ist eine Durchströmung der ersten Nebenleitung 2a vom gemeinsamen Auslass 19 über das Hauptfilterelement 13a der ersten Hauptleitung und die erste Nebenleitung 2a zum ersten Abschnitt 11b der zweiten Hauptleitung 1b möglich. Diese Strömung setzt unmittelbar nach dem Beginn der Durchströmung der zweiten Hauptleitung 1b ein, da analog zum ersten Zustand im ersten Abschnitt 11 b ein geringerer Druck p_{11b} herrscht als am gemeinsamen Anschluss 19. Diese Strömung bewirkt zum Einen den Abtransport der im Abschlämmtrichter 15a angesammelten Partikel und zum Anderen eine Rückspülung des Hauptfilterelements 13a der ersten Hauptleitung 1 a.

Der Wechsel zwischen dem ersten und dem zweiten Zustand erfolgt vorteilhaft geregelt oder gesteuert zum Beispiel immer dann, wenn die Abfuhr des Fluids über den Auslass 19 der erfindungsgemäßen Vorrichtung kurzzeitig unterbrochen ist, da kein Fluid abgenommen wird, kann aber auch während der Durchströmung nach einer bestimmten Menge an jeweils durchgeflossenem Fluid erfolgen. Das Rückspülen des Nebenfilterelements 22a als dritter Zustand kann aus dem zweiten Zustand durch Öffnung der Entleerung 25a zur Ausspülung der Sammelkammer 21a erreicht werden. Ohne Durchströmung der Hauptleitung 1a im ersten Zustand und 1b im zweiten Zustand und ohne Ausspülung der Sammelkammer 21a, 21b im dritten Zustand wird die erfindungsgemäße Vorrichtung in einen vierten Zustand überführt, in welchem ausgeglichene Druckverhältnisse herrschen und keine Strömung stattfindet.

## Patentansprüche

1. Vorrichtung zum Trennen von Partikeln aus Fluiden oder Gasen mit folgenden Merkmalen:
- die Vorrichtung weist zumindest eine Hauptleitung zum Leiten der Flüssigkeit beziehungsweise des Gases In einer Hauptströmungsrichtung (1, 1a, 1b) und zumindest einer Nebenleitung (2, 2a, 2b) auf;
- in der Hauptleitung (1, 1a, 1b) ist zumindest ein Hauptfilterelement (13, 13a, 13b) angeordnet;
- in der Hauptströmungsrichtung (17, 17a, 17b) vor dem Hauptfilterelement (13, 13a, 13b) hat die Hauptleitung (1, 1a,1b) einen ersten Abschnitt (11, 11a, 11b), einen zweiten Abschnitt (12, 12a, 12b), der zwischen dem ersten Abschnitt (11, 11a, 11b) und dem Hauptfilterelement angeordnet ist;
- die Nebenleitung zweigt in dem zweiten Abschnitt der Hauptleitung von der Hauptleitung ab (Beginn der Nebenleitung) und mündet in dem ersten Abschnitt der gleichen oder einer weiteren Hauptleitung (Mündung der Nebenleitung);
- in der Nebenleitung (2, 2a, 2b) ist zumindest ein Nebenfilterelement (22, 22a, 22b) angeordnet;
- die Vorrichtung ist so ausgestaltet, dass bei einer Strömung des Fluids beziehungsweise des Gases in Hauptströmungsrichtung an der Mündung der Nebenleitung ein niedrigerer Druck herrscht als am Beginn der Nebenleitung.

2. Vorrichtung nach Anspruch 1, **dadurch gekennzeichnet, dass** der Querschnitt des ersten Abschnitts (11, 11a, 11b) kleiner ist als der Querschnitt des zweiten Abschnitts (12, 12a, 12b).

3. Vorrichtung nach Anspruch 2, **dadurch gekennzeichnet, dass** der erste Abschnitt (11, 11 a, 11 b) durch eine Venturidüse gebildet ist oder eine Venturidüse umfasst.

4. Vorrichtung nach einem der Ansprüche 1 bis 3, **dadurch gekennzeichnet, dass** die Vorrichtung eine Überströmleitung umfasst, die vor dem ersten Abschnitt (11, 11a, 11b) vor der Hauptleitung (1, 1a, 1b) abzweigt und hinter dem ersten Abschnitt (11, 11a, 11 b) in die Hauptleitung (1, 1a, 1 b) mündet.

5. Vorrichtung nach Anspruch 4, **dadurch gekennzeichnet, dass** in der Überströmleitung (3, 3a, 3b) ein Ventil (Überströmventil, 31, 31a,31b) eingesetzt ist.

6. Vorrichtung nach einem der Ansprüche 1 bis 5, **dadurch gekennzeichnet, dass** die Nebenleitung (2, 2a, 2b) vor dem Nebenfilterelement (22, 22a, 22b) eine Kammer (21, 21a, 21b) zum Sammeln von Partikeln umfasst.

7. Vorrichtung nach Anspruch 6, **dadurch gekennzeichnet, dass** die Sammelkammer (21, 21a, 21b) eine verschließbare Öffnung (25) zum Entleeren der Sammelkammer (21, 21a, 21 b) umfasst.

8. Vorrichtung nach einem der Ansprüche 1 bis 7, **dadurch gekennzeichnet, dass** die Nebenleitung (2, 2a, 2b) hinter dem Nebenfilterelement (22, 22a, 22b) eine weitere Kammer (23, 23a, 23b) umfasst.

9. Vorrichtung nach Anspruch 8, **dadurch gekennzeichnet, dass** die weitere Kammer (23, 23a, 23b) ein Element zur Verzögerung eines Druckausgleichs aufweist.

10. Vorrichtung nach Anspruch 9, **dadurch gekennzeichnet, dass** das Verzögerungselement eine Membran umfasst.

11. Vorrichtung nach Anspruch 9 oder 10, **dadurch gekennzeichnet, dass** das Verzögerungselement einen gasgefüllten Ballon umfasst.

12. Vorrichtung nach einem der Ansprüche 1 bis 11, **dadurch gekennzeichnet, dass** die Nebenleitung (2, 2a, 2b) hinter dem Nebenfilterelement (22, 22a, 22b) ein Ventil oder eine Rückschlagklappe umfasst.

13. Vorrichtung nach einem der Ansprüche 1 bis 12, **dadurch gekennzeichnet, dass** die Nebenleitung (2, 2a, 2b) vor dem Nebenfilterelement (22, 22a, 22b) einen Zentrifugalabscheider, zum Beispiel einen Zyklon oder einen Hydrozyklon umfasst.

14. Verfahren zum Spülen einer Vorrichtung nach einem der Ansprüche 1 bis 13, umfassend einen ersten Zustand, in dem in der Hauptströmungsrichtung (17, 17a, 17b) das Fluid beziehungsweise das Gas durch die Hauptleitung (1, 1a, 1b) gefördert wird, wobei
- ein Nebenstrom im zweiten Abschnitt (12, 12a, 12b) der Hauptleitung in die Nebenleitung (2, 2a, 2b) abgeleitet wird, der Nebenstrom im ersten Abschnitt der gleichen oder einer anderen Hauptleitung (1, 1a, 1b) der Hauptleitung (1, 1a, 1b) zugeführt wird.

15. Verfahren nach Anspruch 14, **gekennzeichnet durch** einen zweiten Zustand, In dem entgegen der Hauptströmungsrichtung (17, 17a, 17b) **durch** das Hauptfilterelement (13, 13a, 13b) das Fluid, beziehungsweise das Gas gefördert wird und die Strömungsgeschwindigkeit des Fluids beziehungsweise des Gases im ersten Abschnitt (11, 11a, 11b) annähernd Null ist.

16. Verfahren nach Anspruch 15, **dadurch gekennzeichnet, dass** im zweiten Zustand das Fluid beziehungsweise das Gas in einem Abschnitt der Nebenleitung hinter dem Nebenfilterelement (22, 22a, 22b) beziehungsweise hinter der weiteren Kammer (23, 23a, 23b) eine Strömungsgeschwindigkeit von annähernd Null hat.

17. Verfahren nach einem der Ansprüche 14 bis 16, **dadurch gekennzeichnet, dass** im ersten Zustand der Druck im ersten Abschnitt (11, 11a, 11b) der Hauptleitung (1, 1a, 1b), d. h. an der Mündung der Nebenleitung (2, 2a, 2b) kleiner ist als im zweiten Abschnitt (12, 12a, 12b) der Hauptleitung, d. h. am Beginn der Nebenleitung (2, 2a, 2b).

18. Verfahren nach einem der Ansprüche 14 bis 17, **dadurch gekennzeichnet, dass** im zweiten Zustand der Druck im ersten Abschnitt (11, 11a,11b) der Hauptleitung (1, 1a, 1b) annähernd so groß ist wie der Druck im zweiten Abschnitt (12, 12a, 12b) der gleichen Hauptleitung (1, 1a, 1b).

19. Verfahren nach einem der Ansprüche 14 bis 18, **dadurch gekennzeichnet, dass** im zweiten Zustand der Druck in der Nebenleitung (2, 2a, 2b) hinter dem Nebenfilterelement (22, 22a, 22b) kleiner ist als im zweiten Abschnitt (12, 12a, 12b) der Hauptleitung.

20. Verfahren nach einem der Ansprüche 14 bis 19, **dadurch gekennzeichnet, dass** im zweiten Zustand der Druck in der Hauptleitung (1, 1a, 1b) hinter dem Hauptfilterelement (13, 13a, 13b) größer Ist als der Druck Im zweiten Abschnitt (12, 12a, 12b).

21. Verfahren nach einem der Ansprüche 14 bis 20, **gekennzeichnet durch** einen dritten Zustand, in dem **durch** Öffnung der Entleerung (25, 25a, 25b) zur Ausspülung der Sammelkammer (21, 21a, 21b) gleichzeitig das Nebenfilterelement (22, 22a, 22b) rückgespült wird.

## Claims

1. Device for the separation of particles from fluids or gases, having the following features:
- the device has at least one main line for conducting the fluid or the gas in a main flow direction (1, 1a, 1b) and at least one secondary line (2, 2a, 2b);
- at least one main filter element (13, 13a, 13b) is arranged in the main line (1, 1a, 1b);
- the main line (1, 1a, 1b) has, upstream of the main filter element (13, 13a, 13b) in the main flow direction (17, 17a, 17b), a first portion (11, 11a, 11b) and a second portion (12, 12a, 12b) which is arranged between the first portion (11, 11a, 11b) and the main filter element;
- the secondary line branches off in the second portion of the main line from the main line (start of the secondary line) and issues in the first portion of the same or of a further main line (issue of the secondary line);
- at least one secondary filter element (22, 22a, 22b) is arranged in the secondary line (2, 2a, 2b);
- the device is designed such that, in the event of a flow of the fluid or of the gas in the main flow direction, a lower pressure prevails at the issue of the secondary line than at the start of the secondary line.

2. Device according to Claim 1, **characterized in that** the cross section of the first portion (11, 11a, 11b) is smaller than the cross section of the second portion (12, 12a, 12b).

3. Device according to Claim 2, **characterized in that** the first portion (11, 11a, 11b) is formed by a venturi tube or comprises a venturi tube.

4. Device according to one of Claims 1 to 3, **characterized in that** the device comprises an overflow line which branches off, upstream of the first portion (11, 11a, 11b), from the main line (1, 1a, 1b) and issues, downstream of the first portion (11, 11a, 11b), into the main line (1, 1a, 1b).

5. Device according to Claim 4, **characterized in that** a valve (overflow valve 31, 31a, 31b) is inserted in the overflow line (3, 3a, 3b).

6. Device according to one of Claims 1 to 5, **characterized in that** the secondary line (2, 2a, 2b) comprises, upstream of the secondary filter element (22, 22a, 22b), a chamber (21, 21a, 21b) for the collection of particles.

7. Device according to Claim 6, **characterized in that** the collection chamber (21, 21a, 21b) comprises a closable orifice (25) for emptying the collection chamber (21, 21a, 21b).

8. Device according to one of Claims 1 to 7, **characterized in that** the secondary line (2, 2a, 2b) comprises, downstream of the secondary filter element (22, 22a, 22b), a further chamber (23, 23a, 23b).

9. Device according to Claim 8, **characterized in that** the further chamber (23, 23a, 23b) has an element for the delay of pressure equalization.

10. Device according to Claim 9, **characterized in that** the delay element comprises a diaphragm.

11. Device according to Claim 9 or 10, **characterized in that** the delay element comprises a gas-filled balloon.

12. Device according to one of Claims 1 to 11, **characterized in that** the secondary line (2, 2a, 2b) comprises, downstream of the secondary filter element (22, 22a, 22b), a valve or a non-return flap.

13. Device according to one of Claims 1 to 12, **characterized in that** the secondary line (2, 2a, 2b) comprises, upstream of the secondary filter element (22, 22a, 22b), a centrifugal separator, for example a cyclone or a hydrocyclone.

14. Method for scavenging a device according to one of Claims 1 to 13, comprising a first state, in which the fluid or the gas is conveyed through the main line (1, 1a, 1b) in the main flow direction (17, 17a, 17b),
- a secondary stream being diverted in the second portion (12, 12a, 12b) of the main line into the secondary line (2, 2a, 2b), the secondary stream being supplied to the main line (1, 1a, 1b) in the first portion of the same or of another main line (1, 1a, 1b).

15. Method according to Claim 14, **characterized by** a second state, in which the fluid or the gas is conveyed through the main filter element (13, 13a, 13b) opposite to the main flow direction (17, 17a, 17b), and the flow velocity of the fluid or of the gas in the first portion (11, 11a, 11b) is approximately zero.

16. Method according to Claim 15, **characterized in that**, in the second state, the fluid or the gas has a flow velocity of approximately zero in a portion of the secondary line downstream of the secondary filter element (22, 22a, 22b) or downstream of the further chamber (23, 23a, 23b).

17. Method according to one of Claims 14 to 16, **characterized in that**, in the first state, the pressure in the first portion (11, 11a, 1b) of the main line (1, 1a, 1b), that is to say at the issue of the secondary line (2, 2a, 2b), is lower than in the second portion (12, 12a, 12b) of the main line, that is to say at the start of the secondary line (2, 2a, 2b).

18. Method according to one of Claims 14 to 17, **characterized in that**, in the second state, the pressure in the first portion (11, 11a, 11b) of the main line (1, 1a, 1b) is approximately as high as the pressure in the second portion (12, 12a, 12b) of the same main line (1, 1a, 1b).

19. Method according to one of Claims 14 to 18, **characterized in that**, in the second state, the pressure in the secondary line (2, 2a, 2b) downstream of the secondary filter element (22, 22a, 22b) is lower than in the second portion (12, 12a, 12b) of the main line.

20. Method according to one of Claims 14 to 19, **characterized in that**, in the second state, the pressure in the main line (1, 1a, 1b) downstream of the main filter element (13, 13a, 13b) is higher than the pressure in the second portion (12, 12a, 12b).

21. Method according to one of Claims 14 to 20, **characterized by** a third state, in which, as a result of the opening of the emptying orifice (25, 25a, 25b) for scavenging the collection chamber (21, 21a, 21b), the secondary filter element (22, 22a, 22b) is simultaneously backwashed.

## Revendications

1. Dispositif pour séparer des particules de fluides ou de gaz, avec les caractéristiques suivantes:
- le dispositif comporte au moins un conduit principal (1, 1a, 1b) pour guider le liquide, respectivement le gaz, dans un sens d'écoulement principal et au moins un conduit auxiliaire (2, 2a, 2b) ;
- dans le conduit principal (1, 1a, 1b) est placé au moins un élément de filtration principal (13, 13a, 13b) ;
- dans le sens d'écoulement principal (17, 17a, 17b) en amont de l'élément de filtration principal (13, 13a, 13b), le conduit principal (1, 1a, 1b) a un premier tronçon (11, 11a, 11b), un deuxième tronçon (12, 12a, 12b), qui est disposé entre le premier tronçon (11, 11a, 11b) et l'élément de filtration principal ;
- dans le deuxième tronçon du conduit principal, le conduit auxiliaire dérive du conduit principal (début du conduit auxiliaire) et débouche dans le premier tronçon du même ou d'un autre conduit principal (embouchure du conduit auxiliaire) ;
- dans le conduit auxiliaire (2, 2a, 2b) est disposé au moins un élément de filtration auxiliaire (22, 22a, 22b) ;
- le dispositif est conçu de façon telle que, lors d'un écoulement du fluide, respectivement du gaz, dans le sens d'écoulement principal, la pression qui règne à l'embouchure du conduit auxiliaire est inférieure à celle au début du conduit auxiliaire.

2. Dispositif selon la revendication 1, **caractérisé en ce que** la section transversale du premier tronçon (11, 11a, 11b) est inférieure à la section transversale du deuxième tronçon (12, 12a, 12b).

3. Dispositif selon la revendication 2, **caractérisé en ce que** le premier tronçon (11, 11a, 11b) est formé par un tube de Venturi ou comprend un tube de Venturi.

4. Dispositif selon l'une quelconque des revendications 1 à 3, **caractérisé en ce que** le dispositif comprend un conduit de trop-plein, qui en amont du premier tronçon (11, 11a, 11b) dérive du conduit principal (1, 1a, 1b) et en aval du premier tronçon (11, 11a, 11b) débouche dans le conduit principal (1, 1a, 1b).

5. Dispositif selon la revendication 4, **caractérisé en ce qu'**une soupape (soupape de décharge, 31, 31a, 31b) est insérée dans le conduit de trop-plein (3, 3a, 3b).

6. Dispositif selon l'une quelconque des revendications 1 à 5, **caractérisé en ce qu'**en amont de l'élément de filtration auxiliaire (22, 22a, 22b), le conduit auxiliaire (2, 2a, 2b) comprend une chambre (21, 21a, 21b) pour collecter des particules.

7. Dispositif selon la revendication 6, **caractérisé en ce que** la chambre de collecte (21, 21a, 21b) comprend une ouverture (25) fermable pour vider la chambre de collecte (21, 21a, 21b).

8. Dispositif selon l'une quelconque des revendications 1 à 7, **caractérisé en ce qu'**en aval de l'élément de filtration auxiliaire (22, 22a, 22b), le conduit auxiliaire (2, 2a, 2b) comprend une chambre supplémentaire (23, 23a, 23b).

9. Dispositif selon la revendication 8, **caractérisé en ce que** la chambre supplémentaire (23, 23a, 23b) comporte un élément pour retarder la compensation de pression.

10. Dispositif selon la revendication 9, **caractérisé en ce que** l'élément retardateur comprend une membrane.

11. Dispositif selon la revendication 9 ou 10, **caractérisé en ce que** l'élément retardateur comprend un ballon rempli de gaz.

12. Dispositif selon l'une quelconque des revendications 1 à 11, **caractérisé en ce qu'**en aval de l'élément de filtration auxiliaire (22, 22a, 22b), le conduit auxiliaire (2, 2a, 2b) comprend une soupape ou un clapet anti-retour.

13. Dispositif selon l'une quelconque des revendications 1 à 12, **caractérisé en ce qu'**en amont de l'élément de filtration auxiliaire (22, 22a, 22b), le conduit auxiliaire (2, 2a, 2b) comprend un séparateur centrifuge, par exemple un cyclone ou un hydrocyclone.

14. Procédé de lavage d'un dispositif selon l'une quelconque des revendications 1 à 13, comprenant un premier état, dans lequel le fluide, respectivement le gaz, est transporté à travers le conduit principal (1, 1a, 1b), dans le sens d'écoulement principal (17, 17a, 17b),
- dans le deuxième tronçon (12, 12a, 12b) du conduit principal, un flux auxiliaire étant dérivé dans le conduit auxiliaire (2, 2a, 2b), dans le premier tronçon du même ou d'un autre conduit principal (1, 1a, 1b), le flux auxiliaire étant amené au conduit principal (1, 1a, 1b).

15. Procédé selon la revendication 14, **caractérisé par** un deuxième état, dans lequel le fluide, respectivement le gaz, est transporté à travers l'élément de filtration principal (13, 13a, 13b) à l'encontre du sens d'écoulement principal (17, 17a, 17b) et la vitesse d'écoulement du fluide, respectivement du gaz dans le premier tronçon (11, 11a, 11b) est proche de zéro.

16. Procédé selon la revendication 15, **caractérisé en ce que** dans le deuxième état, dans un tronçon du conduit auxiliaire, en aval de l'élément de filtration auxiliaire (22, 22a, 22b), respectivement en aval de la chambre supplémentaire (23, 23a, 23b), le fluide, respectivement le gaz, a une vitesse d'écoulement proche de zéro.

17. Procédé selon l'une quelconque des revendications 14 à 16, **caractérisé en ce que** dans le premier état, dans le premier tronçon (11, 11a, 11b) du conduit principal (1, 1a, 1b), c'est-à-dire à l'embouchure du conduit auxiliaire (2, 2a, 2b), la pression est inférieure à celle dans le deuxième tronçon (12, 12a, 12b) du conduit principal, c'est-à-dire au début du conduit auxiliaire (2, 2a, 2b).

18. Procédé selon l'une quelconque des revendications 14 à 17, **caractérisé en ce que** dans le deuxième état, dans le premier tronçon (11, 11a, 11b) du conduit principal (1, 1a, 1b), la pression est approximativement égale à la pression dans le deuxième tronçon (12, 12a, 12b) du même conduit principal (1, 1a, 1b).

19. Procédé selon l'une quelconque des revendications 14 à 18, **caractérisé en ce que** dans le deuxième état, dans le conduit auxiliaire (2, 2a, 2b), en aval de l'élément de filtration auxiliaire (22, 22a, 22b), la pression est inférieure à celle dans le deuxième tronçon (12, 12a, 12b) du conduit principal.

20. Procédé selon l'une quelconque des revendications 14 à 19, **caractérisé en ce que** dans le deuxième état, dans le conduit principal (1, 1a, 1b), en aval de l'élément de filtration principal (13, 13a, 13b), la pression est supérieure à la pression dans le deuxième tronçon (12, 12a, 12b).

21. Procédé selon l'une quelconque des revendications 14 à 20, **caractérisé par** un troisième état, dans lequel, par ouverture de la vidange (25, 25a, 25b) pour le lavage de la chambre de collecte (21, 21a, 21b), l'élément de filtration auxiliaire (22, 22a, 22b) est simultanément soumis à un lavage à contre-courant.
